# EUROPÄISCHE PATENTSCHRIFT

(11) **EP 0 531 910 B1**
(45) Veröffentlichungstag und Bekanntmachung des Hinweises auf die Patenterteilung: **14.06.1995**
(21) Anmeldenummer: 92115224.5
(22) Anmeldetag: 05.09.1992
(51) Int. Cl.: B65H 67/06

(54) **Spinnanlage**
Spinning plant
Installation de filature

(30) Priorität: 12.09.1991 DE 4130300
(43) Veröffentlichungstag der Anmeldung: 17.03.1993
(73) Patentinhaber: BARMAG AG, D-42862 Remscheid (DE)
(72) Erfinder: Langen, Manfred, W-4050 Mönchengladbach 1 (DE); Lücke, Thomas, W-4050 Mönchengladbach (DE)
(74) Vertreter: Pfingsten, Dieter, Dipl.-Ing.

(56) Entgegenhaltungen:
- EP-A- 0 478 164
- EP-A- 0 486 039
- WO-A-87/03274
- DE-A- 4 013 066
- DE-A- 4 029 464
- GB-A- 2 152 084
- US-A- 4 515 328
- MELLIAND TEXTILBERICHTE INTERNATIONAL Bd. 66, Nr. 7, Juli 1985, HEIDELBERG DESeiten 499 - 503 DIPL.-ING. UWE BEHRENS 'Rechnergestützte Transportsysteme in der textilen Fertigung'

## Beschreibung

Die Erfindung betrifft eine Spinnanlage nach dem Oberbegriff des Anspruchs 1.

Aus der DE OS 29 39 675 ist eine Spulenwechseleinrichtung für eine derartige Spinnanlage bekannt, bei welcher ein Fadenbedienungswagen in dem Bedienungsgang von Spulmaschine zu Spulmaschine fahrbar ist. Der Fadenbedienungswagen ist operativ mit einem Spulenabnahmewagen verknüpft. Hierbei werden an der jeweils angefahrenen und bedienten Spulmaschine die Vollspulen von der Spulspindel übernommen und an den Spulenabnahmewagen übergeben, der diese dann an eine Spulentransportvorrichtung übergibt. Die Spulentransportvorrichtung nimmt eine Vielzahl von Spulen auf, welche sie anschließend zu der Einzelkontrolle transportiert, wonach die für gut befundenen Vollspulen zur Verpackungsstation laufen.

Die operative Verknüpfung von Fadenbedienungswagen und Spulenabnahmewagen führt zum Auffüllen der Spulentransportvorrichtung in festgelegten Zeitabständen, welche den Arbeitstakt der Einzelkontrolle bestimmt. Der Arbeitstakt der Einzelkontrolle ist somit abhängig von der Auffüllgeschwindigkeit der Spulentransportvorrichtungen.

Bei dieser bekannten Anlage muß jeweils zumindest eine Spulentransportvorrichtung zur Aufnahme neuer Vollspulen bereitstehen. Hiermit ist ein hoher Platzbedarf verbunden. Weiterhin liegt bei dieser Anlage ein starrer Zeitablauf bei der Herstellung der Vollspulen begründet, da letztlich die Zeitabstände, die zum Auffüllen der Spulentransportvorrichtungen benötigt werden, die Produktionsgeschwindigkeit bestimmen. Eine Verlängerung der Zeitabstände läßt sich nur durch eine Vergößerung der Spulentransportvorrichtungen oder durch eine Erhöhung der Anzahl erreichen. Der ersten der beiden Maßnahmen sind jedoch infolge der heutigen hohen Spulengewichte bei der Vielzahl der aufzunehmenden Vollspulen Grenzen gesetzt, da ansonsten die Spulentransportvorrichtungen nicht mehr handhabbar wären. Die zweite der beiden Maßnahmen bedingt einen erhöhten Platzbedarf.

In der vorliegenden Anmeldung wird unter einem Doffer eine längs der Maschinenfront von Spulmaschine zu Spulmaschine fahrbare Vorrichtung verstanden, welche am Ende einer Spulreise die Abnahme der produzierten Vollspulen vornimmt. Diese Abnahme beinhaltet die Entfernung der Vollspulen von der jeweils bedienten Spulspindel und die Übergabe dieser Vollspulen zum Abtransport an einen Förderwagen.

Der Zeitpunkt der Abnahme der produzierten Vollspulen wird von dem Doffer überwacht, wobei zweckmäßigerweise der Doffer auch die jeweils erforderliche Anzahl von Leerhülsen anfordert.

In einer besonderen Ausführungsform ist der Doffer zusätzlich dafür ausgelegt, die soeben bediente Spulspindel nach der Abnahme und der Übergabe der Vollspulen mit frischen Leerhülsen zu bestücken, damit die Spulmaschine den Spulbetrieb weiterführen kann. Ein solcher Doffer ist z.B. aus der DE AS 24 49 415 in allen Einzelheiten bekannt. Bei dieser Ausführung werden durch eine an dem Doffer vorbeilaufende Förderkette ständig die erforderliche Anzahl der benötigten Leerhülsen vorbeigeführt.

Weiterhin ist aus der DE OS 21 28 974 ein Spulenwechselwagen bekannt, der einen Austausch von Vollspulen gegen Leerhülsen vollzieht. Bei dieser Ausführung werden die Leerhülsen auf dem Spulenwechselwagen mitgeführt und mittels zweier Greifarme auf die Spulspindel der Spulmaschine übergeben.

Weiterhin ist aus der DE OS 21 23 689 eine fahrbare Spulenwechseleinrichtung bekannt, bei welcher die Vollspulen auf eine fahrbare Spulentransporteinrichtung gegeben werden. Anschließend wird die Spulentransporteinrichtung zur Einzelkontrolle gefahren, wo die einzelnen Vollspulen entweder Stück für Stück oder stichprobenartig einer Qualitätsprüfung unterzogen werden, um anschließend eine Verpackungsstation zu durchlaufen.

Schließlich ist aus der WO 87/03274 eine stationäre Spulenspeichereinrichtung mit einer Vielzahl nebeneinander und säulenförmig übereinander angeordneten Speicherplätzen bekannt, die mit auskragend angeordneten Spulendornen besetzt sind. Diese Spulenspeichereinrichtung ist an ihren beiden außen liegenden Endflächen durch jeweils eine Be- und Entladeeinheit bedienbar, die hierzu in vertikaler und horizontaler Richtung verfahrbar ist. Innerhalb der horizontalen Reihen der Spulenspeichereinheit sind die Speicherplätze bzw. Spulendorne an einer über endseitige Umlenkrollen geführten, ringförmig geschlossenen Förderkette bewegbar. Von der Spulenspeichereinrichtung können die auf die Spulendorne aufgeschobenen Spulen durch die Bedieneinheit an Transporteinheiten, die mit einer Endlosfördereinrichtung verbunden sind, einzeln abgegeben werden, um sie zu anderen Prozeßstationen, beispielsweise eine Kontroll- oder Verpackungsstation zu verbringen.

Ausgehend von diesem Stand der Technik ist es Aufgabe der Erfindung, eine Spinnanlage zur ununterbrochenen Herstellung einer Vielzahl von Chemiefäden zu schaffen, die bei geringem Platzbedarf die unvereinbaren unterschiedlichen Zeittakte der Produktion von Vollspulen einerseits und der weiteren Prozeßstationen, wie z. B. Einzelkontrolle und Verpackung andererseits so überwindet, daß der Herstellungstakt der Produktion von Vollspulen unabhängig von dem Zeittakt der Einzelkontrolle ist.

Diese Aufgabe wird gelöst durch die kennzeichnenden Merkmale des Anspruchs 1.

Aus der Erfindung ergibt sich der Vorteil, daß die Spinnanlage vollautomatisch im Dreischichtbetrieb produzieren kann, während die weiteren Prozeßstationen, also z. B. die Einzelkontrolle und die Verpackungsstation, lediglich im Einschichtbetrieb gefahren werden müssen.

Die Erfindung hat erkannt, daß Engpässe im Produktionsablauf der Chemiefasern umgangen werden müssen. Ein solcher Engpaß ist z. B. die Einzelkontrolle, welche mit einer Vielzahl von Hilfspersonen besetzt sein muß. Während die Vielzahl der Spulmaschinen vollautomatisch arbeitet, muß die Einzelkontrolle im wesentlichen manuell erfolgen. Die hierfür benötigten Personalkosten sollten so gering wie möglich gehalten werden.

Die Forderung nach geringem Personalaufwand wird durch die Erfindung erfüllt. Die während des Dreischichtbetriebs auch während der Wochenenden produzierten Vollspulen werden solange in dem Zwischenspeicher abgelegt, bis sie einzeln von dem Zwischenspeicher zu den weiteren Prozeßstationen, z. B. zur Einzelkontrolle, gebracht werden können, um von dort, im Falle einer für gut befundenen Qualität, zur Verpackungsstation zu gelangen.

Die einzelbeweglichen Förderwagen sind unabhängig voneinander fahrbar und bilden ein Transportsystem, welches stets zur Bedienung der Spulköpfe zur Verfügung steht. Hieraus ergibt sich ein flexibles Bedienen entsprechend dem jeweiligen Bedarf der einzelnen Spulspindeln der Spulmaschinen. Die Wartezeiten für die Abnahme der Vollspulen am Ende einer Spulreise sind daher gering. Folglich läßt sich ein hoher Ausnutzungsgrad für die Spulmaschinen in der Gesamtheit erzielen.

Außerdem läßt sich durch die einzelbeweglichen Förderwagen eine jederzeitige Beschickung des ortsfesten Zwischenspeichers erreichen.

Die erfindungsgemäße Ausführung des Zwischenspeichers als Hochgatter bietet den Vorteil einer hohen Speicherkapazität bei geringem Platz- bzw. Raumbedarf. Die Packungsdichte der zwischengespeicherten Vollspulen kann zusätzlich dadurch erhöht werden, daß die Lagerdorne jedes Hochgatters in den einzelnen Etagen mit gleichen Abständen voneinander und so angeordnet sind, daß die Lagerdorne einer Etage und die Lagerdorne einer benachbarten Etage um die Hälfte des Abstandes zueinander versetzt sind.

Die Hochgatter sind zweckmäßigerweise so aufgestellt, daß sie eine der Anzahl der Bedienungsgänge zwischen den Spulmaschinen gleiche Anzahl von Lagergängen aufweisen. Weiterhin besteht für jeden einzelnen der Lagergänge zwischen den Hochgattern ein fest zugeordneter Bedienungsgang zwischen den Spulmaschinen-Kolonnen. Die Anzahl der in den Hochgattern gebildeten Etagen, welche in einen der Lagergänge blickt, ist gleich der Anzahl der Spulmaschinen des zugehörigen Bedienungsgangs, wobei zusätzlich eine festgelegte Reihenfolge der Spulmaschinen mit einer festgelegten Reihenfolge der Etagen der Hochgatter übereinstimmt.

Weiterhin wird vorgeschlagen, die nebeneinander liegenden Aufnahmedorne in jeder Etage in der gleichen Reihenfolge mit Vollspulen zu bestücken.

Durch die Gesamtheit dieser Maßnahmen läßt sich auf einfache Weise jederzeit feststellen, welche Vollspule zu welchem Zeitpunkt von welcher Spulmaschine hergestellt worden ist.

Es soll ausdrücklich gesagt sein, daß dies nicht die einzige Zuordnung der im Zwischenspeicher abgelegten Vollspulen zu den Spulmaschinen der Herstellung ist. Hierzu ist ein weiteres mögliches Ausführungsbeispiel angegeben.

Sowohl das Einlagern als auch das Auslagern der Vollspulen erfolgt mittels des Bediengeräts, welches in jedem der Lagergänge vorgesehen ist.

Hierzu übernimmt das Bediengerät, im folgenden auch Lagergerät genannt, einerseits die von den Förderwagen angelieferten Vollspulen und legt sie auf den Lagerdornen ab. Andererseits übernimmt das Lagergerät unabhängig von der Einlagerung die Vollspulen und bringt sie zu Einzelförderern, die unabhängig von den Förderwagen an- und abgefahren werden. Hierzu sind Ausführungsbeispiele gegeben.

Aus den Merkmalen des Anspruchs 2 ergibt sich eine Weiterbildung, mit dem Vorteil, daß eine raumsparende Anordnung der Spulmaschinen-Kolonnen möglich ist und trotzdem die Vorteile der Erfindung ausgenutzt werden können. Die mehreren Bedienungsgänge der einzelnen Spulmaschinen-Kolonnen können je nach Platzangebot parallel, senkrecht zueinander oder sternförmig angeordnet werden. Während die Förderbahnen in den einzelnen Bedienungsgängen in Förderbahnhöhen laufen, die im wesentlichen gleich sind und durch die Arbeitshöhen der Doffer vorgegeben ist, weisen die einzelnen Förderbahnen auf ihrem Weg von ihrem Bedienungsgang zum Zwischenspeicher ein Wegstück auf, auf welchem sie auf ihre jeweilige Förderhöhe am Zwischenspeicher geführt werden. Auf dem Weg vom Zwischenspeicher zum Bedienungsgang ist dann ein Wegstück vorgesehen, auf welchem die Förderwagen wieder auf die Förderbahnhöhe in den Bedienungsgängen geführt werden. Diese Weiterbildung der Erfindung macht sich die Erkenntnis zunutze, daß die für die Einlagerung und Auslagerung der Vollspulen in den Hochgattern ohnehin notwendigen Aufzüge ohne weitere Maßnahmen so ausgelegt werden können, daß sie die Entnahme der Vollspulen von den Förderwagen in jeder unterschiedlichen Förderhöhe bewerkstelligen können.

Die Merkmale des Anspruchs 3 führen zu einer Weiterbildung der Erfindung mit dem Vorteil eines Umlaufbetriebs der Förderwagen, so daß keine Ausweichstrecken für sich entgegenkommende Förderwagen vorgesehen werden müssen.

Die Merkmale des Anspruchs 4 machen sich die Erkenntnis zunutze, daß die Förderwagen nach Abgabe der Vollspulen an den Zwischenspeicher erneute Ladekapazität besitzen. Auf diese einfache Weise kann eine sofortige Bereitstellung von frischen Leerhülsen beim Spulenwechsel der jeweils bedienten Spulmaschine erreicht werden. Ein weiterer Vorteil liegt darin, daß die Leerhülsen, die aus einem bestimmten Leerhülsenspeicher stammen, mit Markierungen versehen werden können, um diese Information im Bedarfsfall bei der Qualitätskontrolle sowie bei der Produktverfolgung ausnutzen zu können. Diese Merkmale sind nicht allein auf diese Erfindung beschränkt, und können ggf. zum Gegenstand einer separaten, vom Gegenstand dieser Erfindung unabhängigen Schutzrechtsanmeldung gemacht werden.

Die Merkmale des Anspruchs 5 sind eine Weiterbildung der Erfindung mit dem Vorteil, daß auf der Rückspur eine Pufferung von Förderwagen stattfinden kann. Dieser Vorteil führt dazu, daß im Bedarfsfall unmittelbar nach Anforderung eines der Förderwagen dieser auf kurzem Weg und damit mit geringem Zeitverlust zu der zu bedienenden Spulmaschine abgerufen werden kann.

Durch die Merkmale der Ansprüche 6 und 7 lassen sich diese Wege und damit die Zeitverluste noch weiter verringern, wobei die kürzesten Wege und damit die kürzesten Zeitverluste in der Kombination dieser Merkmale gemäß Anspruch 8 bzw. Anspruch 9 erreichbar ist.

Die Merkmale des Anspruchs 10 bieten eine Weiterbildung mit dem Vorteil, daß der Boden des Bedienungsgangs zwischen den Spulmaschinen-Kolonnen zum Begehen frei bleibt.

Aus den Merkmalen des Anspruchs 11 folgt eine Weiterbildung, die auch ablaufseitig einen ununterbrochenen Betrieb während der Durchführung von Einzelkontrolle und der Verpackung der Vollspulen ermöglicht, und zwar ohne daß sich die Einzelförderer gegenseitig behindern bzw. ohne daß sich entgegenkommende Einzelförderer aneinander vorbeigeführt werden müssen.

Die Merkmale des Anspruchs 12 stellen sicher, daß jeweils genügend Einzelförderer zur Beladung mit Vollspulen bereitstehen.

In einer besonderen Ausführungform sind die Einzelförderer als Transportplattformen ausgebildet und laufen auf einer Rollenbahn ab, so daß sich ein separater Antrieb für die Einzelförderer erübrigt.
Die Merkmale des Anspruchs 14 bieten weitere Vorteile. Zum einen wird zur Übergabe der Vollspulen an die Einzelförderer kein weiteres Gerät benötigt, da die Erfindung sich die Erkenntnis zunutze macht, daß das Lagergerät keine Vollauslastung hat. Zum anderen bietet der horizontal auskragende Tragdorn des Einzelförderers den Vorteil, daß die Vollspulen auf ihrem Weg von der Spulmaschine über den Doffer auf den Förderwagen in den Zwischenspeicher und mittels der Einzelförderer über die Einzelkontrolle bis zur Verpackungsstation mit horizontal liegender Achse transportiert werden. Es hat sich gezeigt, daß hierdurch zuverlässig das Herabfallen von Fadenenden verhindert werden kann. Erst in der Verpackungsstation ist zur besseren Palettierung das Kippen der Spulen erforderlich. Hierzu bietet sich die Weiterbildung der Erfindung gemäß Anspruch 15 an.

Es soll ausdrücklich gesagt werden, daß diese Weiterbildung der Erfindung nicht auf diese Anmeldung beschränkt ist.

Das Schwenken der Tragdorne kann auf zwei Weisen geschehen. Entweder weisen die Transportplattformen feststehende Tragdorne auf und werden während des Herantransports gemeinsam mit ihrem Tragdorn um 90 Grad gekippt, oder die Tragdorne sind auf den Transportplattformen schwenkbar angeordnet.

Die Merkmale des Anspruchs 16 verdienen besondere Beachtung. Durch diese Maßnahmen lassen sich einerseits die Abstände der Bedienungsgänge zwischen den Spulmaschinen-Kolonnen und andererseits die Abstände der Lagergänge zwischen paarweise zugeordneten Hochgattern sehr klein halten, wobei gleichzeitig die Tragdorne auf den Förderwagen starr angeordnet werden können. Die Tragdorne der Förderwagen kragen während des Fahrens in dem Bedienungsgang horizontal so aus, daß sie jeweils in Richtung zur Spulmaschinenfront zeigen. Die paarweise Anordnung der Tragdorne stellt sicher, daß die auskragende Länge halbiert werden kann. Hierdurch können die Spulmaschinen-Kolonnen entsprechend näher zusammenrücken, so daß der Platzbedarf abnimmt. Infolge dieser Anordnung, die sich bis in das Hochlager fortsetzt, bleibt stets die eindeutige Zuordnung der produzierten Vollspulen zu der jeweiligen Spulmaschine bei geringstem Platzbedarf erhalten.

Außerdem läßt sich durch diese einfache Maßnahme erreichen, daß die Förderwagen und die Regalbediengeräte nicht entsprechend schwer ausgelegt werden müssen, um ein Umkippen infolge Übergewichts zu vermeiden.

Die Beladung der Förderwagen mit Vollspulen erfolgt, wie bereits gesagt, mittels der Doffer. Dies kann auf zweierlei Arten realisiert werden.

Sofern der Doffer einen Arbeitsarm aufweist, der zur Aufnahme der gesamten Anzahl der Vollspulen einer Spulspindel ausgelegt ist, muß die Übergabe der Vollspulen auf die paarweise vorhandenen Tragdorne der Förderwagen in zwei Schritten vollzogen werden:
Nachdem der Förderwagen in die entsprechende Position gebracht wurde, wird zuerst die erste Hälfte der vorhandenen Vollspulen von dem Doffer auf einen der paarweise vorhandenen Tragdorne des Förderwagens geschoben, und anschließend der Förderwagen relativ zum Arbeitsarm des Doffers um die Förderteilung weitergefahren. Dann wird die zweite Hälfte der Vollspulen auf den zweiten der paarweise vorhandenen Tragdorne des Förderwagens geschoben, und der Übergabevorgang ist beendet.

Sofern der Doffer allerdings, wie die Merkmale des Anspruchs 17 lehren, paarweise vorhandene Arbeitsarme aufweist, welche jeweils die halbe Anzahl der Spulen einer Spulspindel aufnimmt und welche die Förderteilung haben, kann der Übergabevorgang der produzierten Vollspulen von dem Doffer auf den Förderwagen in einem einzigen Schritt vollzogen werden: Nachdem der Förderwagen in Position gebracht wurde, werden alle Spulen gleichzeitig von den paarweise vorhandenen Arbeitsarmen des Doffers auf die paarweise vorhandenen Tragarme des Förderwagens geschoben, und der Doffer steht somit in weniger als der Hälfte der für die erste Variante benötigten Zeit zur Bedienung der nächsten Spulmaschine bereit.

Die Merkmale des Anspruchs 18 ermöglichen eine besonders hohe Packungsdichte im Zwischenspeicher, ohne die eindeutige Zuordnung der Vollspulen zu den einzelnen Spulmaschinen zu verhindern.

Die Weiterbildung nach Anspruch 19 verdient ebenfalls besondere Aufmerksamkeit:
In der Kontrolle werden Minderqualitäten ausgesondert. Derartige Minderqualitäten können aber gegebenenfalls noch verkauft werden. Hierfür ist allerdings Voraussetzung, daß eine entsprechend hohe Anzahl von Spulen in Minderqualität zur Verfügung steht, um eine Palettierung zu ermöglichen. Durch Zurückschleusen der Spulen minderer Qualität lassen sich entsprechend hohe Anzahlen von Spulen im Zwischenspeicher ansammeln.

Die Weiterbildung nach Anspruch 20 stellt den ununterbrochenen Spulbetrieb auch dann noch sicher, wenn ein Doffer ausfällt. In diesem Fall erfolgt der Spulenwechsel von Hand auf den Notbedienungswagen. Der Notbedienungswagen wird dann mittels des Aufzuges so angehoben, daß die produzierten Vollspulen ohne Mühe an die Förderwagen übergeben werden können.

Zweckmäßigerweise wird der Notaufzug an dem dem Zwischenspeicher zugewandten Ende des zweiten Astes der Hinspur angeordnet, da durch diese einfache Maßnahme der Förderbetrieb der Förderwagen ungehindert weiterlaufen kann.

Im folgenden wird die Erfindung anhand von Ausführungsbeispielen näher erläutert. Es zeigen:
- Fig. 1: eine Draufsicht auf eine erfindungsgemäße Spinnanlage;
- Fig. 1a: eine perspektivische Ansicht einer weiteren erfindungsgemäßen Spinnanlage;
- Fig. 2: eine Seitenansicht eines erfindungsgemäßen Zwischenspeichers;
- Fig. 3: eine Seitenansicht eines erfindungsgemäßen Zwischenspeichers mit versetzt angeordneten Tragdornen;
- Fig. 4: eine Ansicht eines Einzelförderers auf einer Rollenbahn.

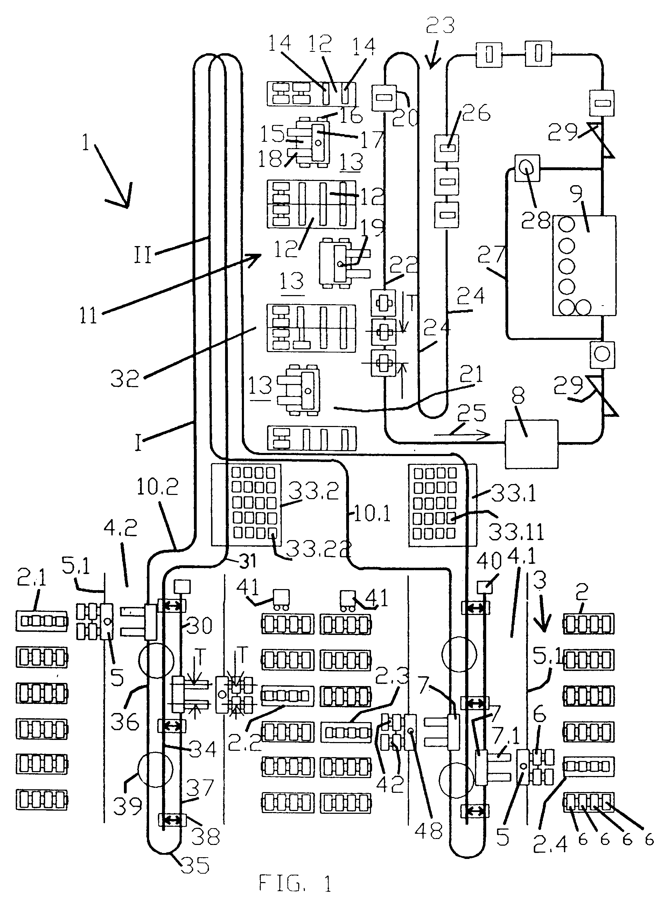

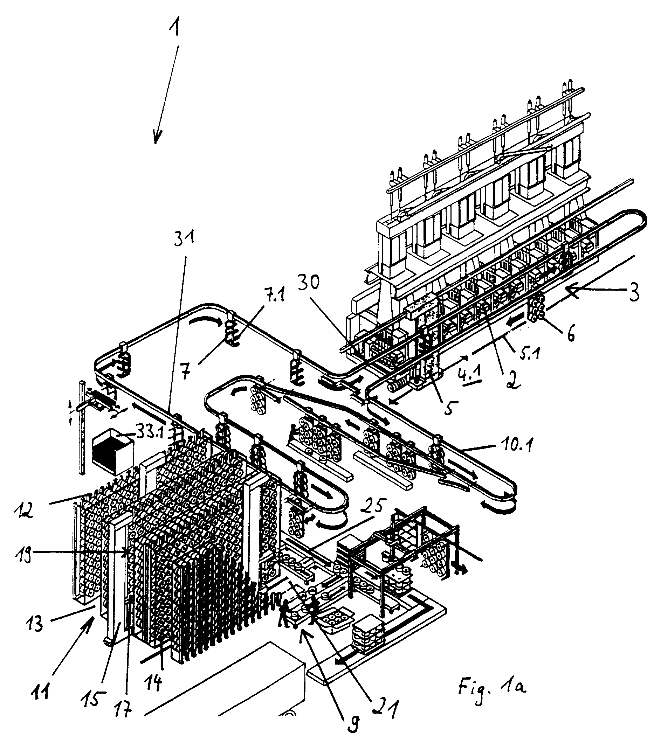

Wie Fig. 1 und Fig. 1a erkennen lassen, besteht eine erfindungsgemäße Spinnanlage 1 zur ununterbrochenen Herstellung einer Vielzahl von Chemiefäden aus einer Vielzahl von Spulmaschinen 2, die in Spulmaschinen-Kolonnen 3 längs eines Bedienungsganges 4.1, 4.2 angeordnet sind. Gezeigt sind in Fig. 1 zwei Bedienungsgänge 4.1, 4.2, welche zueinander parallel ausgerichtet sind. Auf jeder Seite je eines der Bedienungsgänge ist jeweils eine Spulmaschinen-Kolonne 3 parallel zu dem Bedienungsgang 4.1, 4.2 angeordnet, wobei die Spulspindeln der einzelnen Spulmaschinen senkrecht in den Bedienungsgang ragen.

In jedem der Bedienungsgänge ist ein Doffer 5 auf einem Doffer-Fahrweg 5.1 fahrbar angeordnet, und zwar so, daß der Doffer 5 entlang des Doffer-Fahrwegs 5.1 von Spulmaschine zu Spulmaschine fahren kann. Im vorliegenden Ausführungsbeispiel ist jeder der Spulmaschinen-Kolonnen ein separater Doffer 5 zugeordnet. Es soll jedoch ausdrücklich darauf hingewiesen werden, daß es auch möglich ist, in jedem Bedienungsgang einen einzigen Doffer auf einem Doffer-Fahrweg fahren zu lassen, der an beiden Spulmaschinen-Kolonnen vorbeiführt.

Der Doffer 5 übernimmt an der jeweils angefahrenen und bedienten Spulmaschine 2.1, 2.2, 2.3, 2.4 Vollspulen 6 von der Spulspindel und übergibt diese an einen Förderwagen 7, der zu diesem Zweck an der jeweils angefahrenen und bedienten Spulmaschine 2.1, 2.2, 2.3, 2.4 in Warteposition ist, um die Vollspulen zu übernehmen. Die Übernahme der Vollspulen auf den Förderwagen erfolgt mittels Tragdorn 7.1. Hierauf wird noch eingegangen werden.

Jedem der Bedienungsgänge 4.1, 4.2 ist eine Förderbahn 10.1, 10.2 zugeordnet. Auf jeder der Förderbahnen ist eine Mehrzahl von einzelbeweglichen Förderwagen 7 fahrbar, wobei jeder einzelne Förderwagen über einen separaten Antrieb verfügt und unabhängig von anderen Förderwagen angehalten werden kann.

Die Förderbahnen verlaufen zwischen den Stirnseiten der Spulmaschinen-Kolonnen und einem Zwischenspeicher 11, und zwar so, daß die Förderwagen auf diesem Weg behinderungfrei hin- und zurückfahrbar sind.

Jede der einzelnen Förderbahnen ist hierzu als geschlossene Förderbahn ausgebildet, und weist eine Hinspur 30 von dem Bedienungsgang 4.1, 4.2 zu dem Zwischenspeicher 11 auf, und eine Rückspur 31 in umgekehrter Richtung, wobei sich jeweils eine geschlossene Bahn in dem Bedienungsgang 4.1, 4.2 und von dort bis vor eine der Stirnseiten 32 des Lagergangs 13 des Zwischenspeichers 11 erstreckt.

Als Hinweg ist in der vorliegenden Anmeldung derjenige Weg bezeichnet, welchen die Förderwagen, beladen mit den zu einer Spulspindel gehörigen Vollspulen, bis zur Übergabe der Vollspulen an den Zwischenspeicher zurücklegen.

Als eine Besonderheit ist es anzusehen, daß die Rückspur 31 jeder Förderbahn 10.1, 10.2 an je einem Leerhülsenspeicher 33.1, 33.2 vorbeiführt, wo die Aufnahme der für eine Spulspindel erforderlichen Leerhülsen 33.11, 33.22 durch die Tragdorne 7.1 der Förderwagen 7 erfolgt.

Eine weitere Besonderheit ist, daß gem. Fig. 1 die Rückspur 31 jeder der geschlossenen Förderbahnen 10.1, 10.2 sich als Sackgasse 34 längs des Bedienungsgangs 4.1, 4.2 erstreckt, und daß die Hinspur im Bedienungsgang U-förmig ausgeführt ist, wobei ein mit dem Zwischenspeicher 11 verbundener erster Ast 36 auf einer der beiden Seiten der Rückspur 31 liegt, und wobei ein zweiter Ast 37 an dem dem Zwischenspeicher 11 zugewandten Ende des Bedienungsgangs 4.1, 4.2 endet, und auf der anderen Seite der Rückspur 31 liegt, und wobei der erste Ast 36 und der zweite Ast 37 an dem von dem Zwischenspeicher 11 abgewandten Ende durch einen Umkehrbogen 35 verbunden sind, und daß der erste Ast 36 und der zweite Ast 37 mit der Rückspur 31 durch Weichen verbunden sind.

Hierzu ist die Rückspur 31 mit dem ersten Ast 36 der Hinspur 30 über Drehweichen 39 verbunden, welche die von der Rückspur 31 kommenden Förderwagen 7 unter Umkehrung der Fahrtrichtung auf den ersten Ast 36 der Hinspur 30 einschleusen.

Weiterhin ist hierzu die Rückspur 31 mit dem zweiten Ast 37 der Hinspur 30 über Parallelweichen 38 verbunden, welche die von der Rückspur 31 kommenden Förderwagen 7 unter Beibehaltung der Fahrtrichtungen auf den zweiten Ast 37 einschleusen.

In Fahrtrichtung der Rückspur 31 gesehen sind insgesamt fünf Weichen hintereinander angeordnet, wobei Drehweichen und Parallelweichen wechselnd aufeinander folgen. Weiterhin sind Drehweichen und Parallelweichen in enger Nachbarschaft zueinander angeordnet.

Die derartige Weichenanordnung stellt sicher, daß nicht jeder der Förderwagen 7 stets den gesamten U-förmigen Weg umfahren muß, wenn eine der Spulmaschinen bedient werden muß. Weiterhin ist sichergestellt, daß jeder der Förderwagen auf jedem möglichen Weg stets so an einem Doffer ankommt, daß seine auskragenden Tragdorne in der richtigen Aufnahmeposition dem Doffer zugewandt sind.

Die jeweils einem der Bedienungsgänge zugeordneten Förderbahnen sind voneinander unabhängig, indem die Förderbahnen 10.1, 10.2 in unterschiedlichen Förderbahnhöhen I,II an dem Zwischenspeicher vorbeiführen. Die Förderbahnhöhen I,II weisen einen so großen vertikalen Abstand voneinander auf, daß sich die einzelnen Förderwagen der beiden Förderbahnen nicht berühren können.

Die von den Förderwagen aufgenommenen Vollspulen sollen nach Durchlaufen der Einzelkontrolle 8 zur Verpackungsstation 9 gebracht werden.

Da die Vollspulen auf den Spulmaschinen ununterbrochen produziert werden, sind alle Förderwagen im 24 Stunden Betrieb beschäftigt, um die Vollspulen von den Spulmaschinen zu dem ortsfesten Zwischenspeicher 11 zu bringen.

Der Zwischenspeicher 11 besteht aus mehreren Hochgattern 12, die parallel zueinander angeordnet sind und paarweise zwischen sich jeweils einen Lagergang 13 bilden. Jedes der Hochgatter 12 ist mit einer Vielzahl von Lagerdornen 14 ausgestattet.

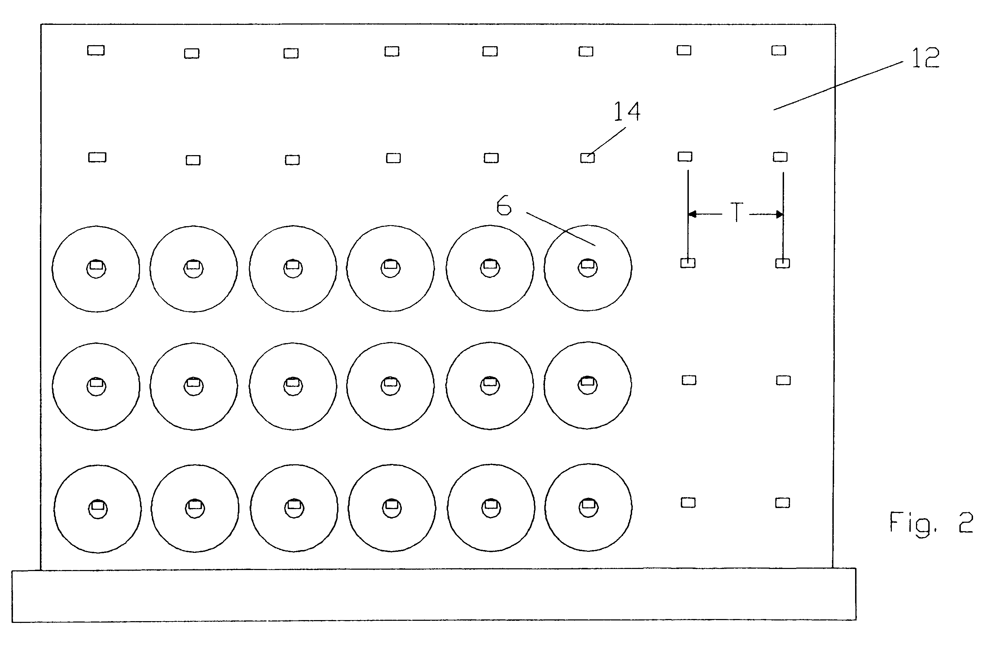

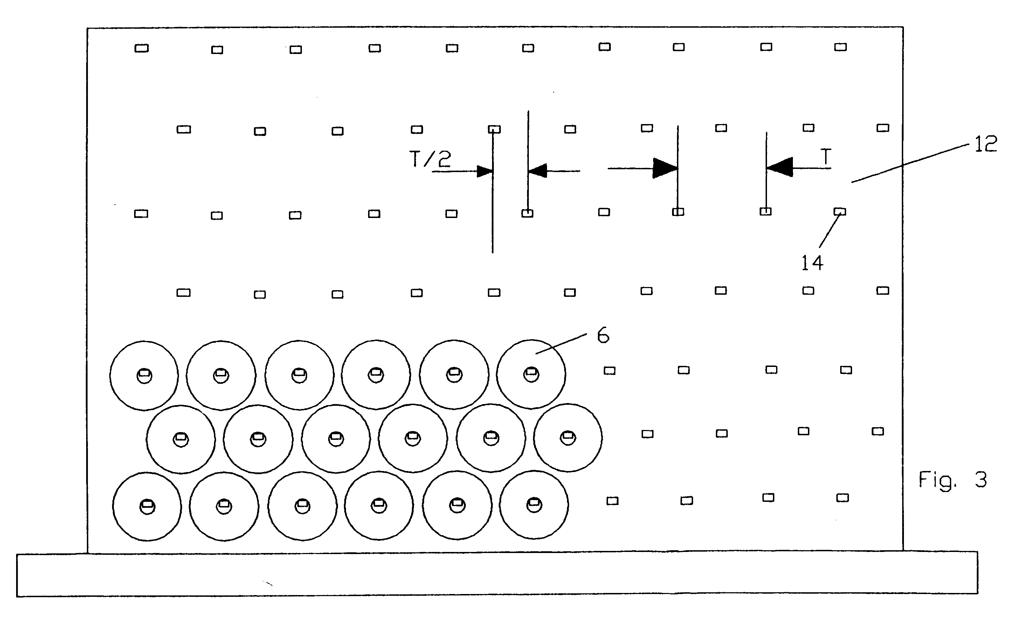

Wie die Fig. 2 und 3 zeigen, sitzen die Lagerdorne 14 nebeneinander und in Etagen übereinander und kragen in Richtung auf den Lagergang 13 (s. Fig. 1) aus.

In jedem der Lagergänge ist ein Lagergerät 15 zwischen den beiden Endseiten 21 und 32 des Lagergangs hin- und herfahrbar.

Jedes der Lagergeräte weist eine Grundplattform auf, die mit Rädern 16 bestückt ist, und die einen Aufzug 17 trägt, an welchem ein Paar von Tragdornen 18 sitzt. Das Paar von Tragdornen 18 dient zur Übernahme der von einem Förderwagen angelieferten Vollspulen und zur Weitergabe der Vollspulen an die Lagerdorne 14 eines der Hochgatter, sowie zur Übernahme der Vollspulen einer Spulspindel und zur Weitergabe derselben an die Einzelförderer 20. Hierauf wird noch eingegangen werden. Im Falle des Ausführungsbeispiels nach Fig. 1a werden die Einzelförderer 20 gebildet von einer Rollen-Transportbahn, auf welche die einzelnen Vollspulen vom Zwischenspeicher zur Verpackungsstation 9 laufen. Ein Einzelförderer im Sinne der vorliegenden Anmeldung dient also dem Transport einzelner Vollspulen von dem Zwischenspeicher 11 zu einer weiteren Prozeßstation, z. B. zu einer Einzelkontrolle oder einer Verpackungsstation. Jedenfalls ist es eine besondere Ausführungsform der Erfindung, die Tragdorne 18 am Aufzug 17 jeweils paarweise vorzusehen.

Die Tragdorne 18 sind mittels des Aufzugs höhenverfahrbar, wobei der Aufzug 17 um die Schwenkachse 19 derart schwenkbar ist, daß ein Tragdorn 18 des Lagergeräts 15 entweder mit einem Tragdorn eines Förderwagens oder mit einem Lagerdorn fluchtet.

In einer besonderen Ausführungsform der Erfindung sind die Lagergeräte zweigeteilt. Ein erster Teil ist fahrbar in einem Lagergang 13, und ein zweiter Teil sitzt stationär jeweils vor einem Lagergang. Der stationäre Teil ist höhenverfahrbar zwischen den Förderbahnhöhen I,II der Förderbahnen 10.1, 10.2 sowie um 180 Grad schwenkbar. Hierdurch werden die angelieferten Vollspulen zunächst auf den stationären Teil übernommen, und anschließend auf den fahrbaren Teil zur Zwischenspeicherung weitergegeben.

Die Einzelförderer 20 bringen die zwischengespeicherten Vollspulen während des Schichtbetriebs der Einzelkontrolle 8 und der Verpackungsstation 9 dorthin.

Hierzu sind die Einzelförderer zwischen einer der Endseiten 21 des Lagergangs 13 und der Einzelkontrolle 8 sowie der Verpackungsstation 9 fahrbar.

Im vorliegenden Fall erfolgt dies auf der umlaufenden Transportbahn 22, welche als Besonderheit zwischen der Verpackungsstation 9 und der Endseite 21 der Lagergänge 13 eine Pufferstrecke 23 in Form paralleler Umwegschleifen 24 aufweist.

Diese Transportbahn wird von den Einzelförderern in der Richtung 25 durchfahren, wobei im Bereich der Endseite 21 der Lagergänge 13 jeder Einzelförderer 20 in eine Halteposition bringbar ist, in welcher die Weitergabe der Vollspulen mittels des Lagergeräts erfolgt.

Zur Weitergabe der Vollspulen weist jeder Einzelförderer 20 im Ausführungsbeispiel nach Fig. 1 einen Tragdorn 26 auf, welcher in jeder der Haltepositionen mit seinem freien Ende horizontal in den Lagergang weist. Im mittleren der drei Lagergänge ist der Aufzug derart geschwenkt und auf derartige Höhe gefahren, daß zwei Tragdorne 26 zweier benachbarter Einzelförderer 20 durch die beiden Tragdorne 18 des Aufzugs gleichzeitig bedient werden können. Hierauf wird noch eingegangen werden.

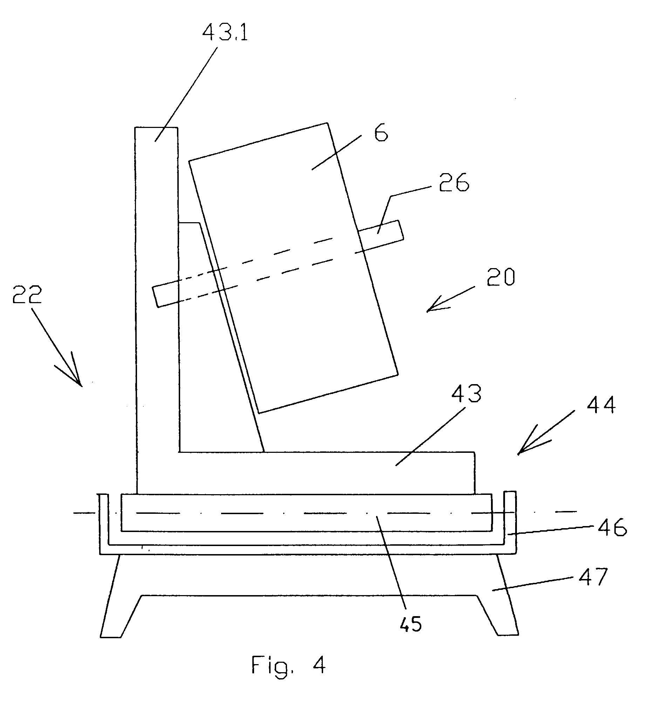

Wie Fig. 4 zeigt, besteht die umlaufende Transportbahn 22 aus einer Rollenbahn 44. Die Rollenbahn 44 wird von einer Vielzahl von einzelnen Laufrollen 45 gebildet, die drehbar in einem Lagerbock 46 sitzen. Der Lagerbock 46 stützt sich mit einem Fußgestell 47 gegenüber dem Boden ab.

Jeder Einzelförderer 20 besteht aus einer Transportplattform 43, die mit ihrer Unterseite auf der Rollenbahn entlangläuft. Die Transportplattform 43 weist den auskragenden Tragdorn 26 auf, der hier mit einer Vollspule 6 bestückt ist.

Wie Fig. 4 zeigt, kragen die Tragdorne 26 der Einzelförderer 20 in horizontaler Richtung aus. Die Spulen liegen also während des Transports horizontal. Die Verpackung soll aber mit vertikal liegenden Spulen erfolgen. Hierzu müssen die Spulen um 90 Grad gedreht werden. Im Ausführungsbeispiel gemäß Fig. 1 ist hierzu vor der Verpackungsstation 9 eine Transportplattform-Wendeeinrichtung 29 vorgesehen, welche die darüberlaufenden Transportplattformen um 90 Grad wendet. Alsdann laufen die in dieser gewendeten Ansicht kreisförmig gezeichneten Vollspulen in die Verpackungsstation, um dort palettiert zu werden. Hinter der Verpackungsstation wird die Wendung um 90 Grad durch eine entgegengesetzt wirkende Wendeeinrichtung 29 rückgängig gemacht.

Hierzu ist die Transportplattform mit einer rechtwinklig zu ihr angeordneten Rücken-Plattform 43.1 versehen, welche während des Transports des Einzelförderers 20 von dem Zwischenspeicher zur Einzelkontrolle und zur Verpackungsstation aufrecht steht. Das Wenden der Transportplattform erfolgt nun dadurch, daß die gezeigte Rollenbahn 44 gegen den Uhrzeigersinn verdreht wird, wobei gleichzeitig die Rückenplattform 43.1 von einer übernehmenden (nicht gezeigten) Rollenbahn so unterstützt wird, daß ein kontinuierliches Drehen der Transportplattform um 90 Grad gegen den Uhrzeigersinn während des Laufens auf der Rollenbahn erfolgt. Sobald die Transportplattform 20 auf der übernehmenden (nicht gezeigten) Rollenbahn fährt, endet die gezeigte (übergebende) Rollenbahn 44.

Das Zurückwenden der Transportplattform erfolgt auf dieselbe Weise mit der Drehrichtung im Uhrzeigersinn.

Da weiterhin ein nicht näher gezeigter Bereich des Zwischenspeichers zur Zwischenspeicherung von Spulen reserviert ist, die in der Einzelkontrolle 8 als Spulen minderer Qualität 28 aussortiert wurden, ist zum Zurückfahren der aussortierten Vollspulen minderer Qualität 28 hinter der Einzelkontrolle 8 eine Umgehungsstrecke 27 der Verpackungsstation 9 vorgesehen.

Weiterhin ist in jedem der Bedienungsgänge 4.1, 4.2 ein Aufzug 40 und ein Notbedienungswagen 41 vorgesehen, mit welchem Spulen, die im manuellen Notbetrieb von Hand auf den Notbedienungswagen aufgeladen wurden, auf das Niveau des Förderwagen anhebbar sind.

In der gezeigten bevorzugten Ausführungsform ist der Notaufzug an dem dem Zwischenspeicher zugewandten Ende des zweiten Astes der Hinspur angeordnet, so daß der Notaufzug nicht den fortlaufenden Förderbetrieb der Förderwagen behindern kann.

Wie Fig. 2 zeigt, werden die Vollspulen 6 in einem der Hochgatter 12 in beispielsweise fünf Etagen übereinander und in sieben vertikalen Reihen nebeneinander gespeichert. Die Lagerdorne 14 weisen voneinander den Abstand T auf, und die Lagerdornreihen zweier benachbarter Etagen sind so angeordnet, daß sich identische Etagen ergeben.

Um die Zuordnung der einzelnen Lagerpositionen zu den einzelnen Spulmaschinen zu gewährleisten, ist hier folgende Einteilung gewählt:

Entsprechend der Anzahl der Spulmaschinen pro SpulmaschinenKolonne (lt. Fig. 1 z.B. fünf Stück), weist das Hochgatter fünf Etagen auf, so daß jeder Spulmaschine eine Etage eindeutig zugeordnet ist.

In jeder einzelnen Etagen, werden von links beginnend, die jeweils produzierten Vollspulen 6 jeweils einer bestimmten Spulmaschine lückenlos nacheinander zwischengespeichert.

Fig. 3 zeigt eine weitere Variante. Hier werden die Vollspulen 6 in sieben Etagen übereinander und in zehn vertikalen Reihen nebeneinander gespeichert. Die Lagerdorne weisen ebenfalls den Abstand T auf, und die Lagerdorne einer Etage sind zu den Lagerdornen einer benachbarten Etage um die Hälfte des Abstandes T/2 zueinander versetzt.

Um die Zuordnung der einzelnen Lagerpositionen zu den einzelnen Spulmaschinen zu gewährleisten, ist hier eine abweichende Einteilung gewählt:
Hier liegen jeweils zehn Lagerdorne 14 pro Etage vor, wobei sieben Etagen übereinander liegen.

Entsprechend der Anzahl der Spulmaschinen (lt. Fig. 1 fünf Stück) weist das Hochgatter pro Etage eine doppelte Anzahl von Lagerdornen auf. Werden, wie später noch erläutert wird, die Vollspulen je einer Spulspindel paarweise nebeneinander zwischengespeichert, so liegen die Vollspulen einer Spulmaschinen-Kolonne, die aus fünf Spulmaschinen besteht, in einer Etage nebeneinander. Die von der ersten Spulmaschine stammenden Vollspulen nehmen dabei die erste Doppelposition ein, die von der zweiten Spulmaschine kommenden Vollspulen die zweite Doppelposition usw.

Die zeitlich nacheinander auf einer bestimmten Spulmaschine produzierten Vollspulen werden an der bestimmten Doppelposition bei dieser Anordnung übereinanderliegend zwischengespeichert.

Die Handhabung der Vollspulen:
Im vorliegenden Fall werden auf jeder der Spulspindeln vier Spulen gleichzeitig produziert.

Jeder Doffer 5 weist zwei parallele Arbeitsarme 42 auf, die voneinander den Abstand der Förderteilung T einnehmen, und zur Aufnahme der halben Anzahl der auf einer Spulspindel gleichzeitig produzierten Spulen ausgelegt ist. Im vorliegenden Fall nimmt also jeder der Arbeitsarme 42 zwei Vollspulen 6 auf. Dieser Vorgang ist im einzelnen z.B. in der DE OS 29 39 675 (=Bag 1163) beschrieben, auf die diesbezüglich im vollen Umfang Bezug genommen wird.

Verlangt eine Spulmaschine 2 nach einem Wechsel der Spulen, so fährt der zugehörige Doffer 5 die entsprechende Spulmaschine 2.1, 2.2, 2.3, 2.4 an und ruft einen freien Förderwagen 7 herbei.

Jeder Förderwagen 7 weist zwei Tragdorne 7.1 auf, welche voneinander ebenfalls den Abstand T der Förderteilung einnehmen.

Der herbeigerufene Förderwagen 7 positioniert sich in der zugehörigen Dofferposition, so daß die Tragdorne 7.1 des Förderwagens 7 exakt koaxial zu den noch den Spulmaschinen zugewandten Arbeitsarmen 42 des Doffers liegen.

Der Doffer übernimmt auf jeden seiner beiden Arbeitsarme 42 jeweils die Hälfte der Vollspulen einer Spulspindel, hier also zwei Stück, und schwenkt anschließend seine Arbeitsarme um 180 Grad, so daß die mit Vollspulen bestückten Arbeitsarme den Tragdornen 7.1 des wartenden Förderwagens zugeordnet sind, und exakt mit diesen fluchten. Die Schwenkbewegung erfolgt um die vertikale Schwenkachse 48.

Der Doffer schiebt nun die jeweils zwei Vollspulen von seinen Arbeitsarmen auf die Tragdorne des Förderwagens, die ebenfalls zur Aufnahme von zwei Vollspulen ausgelegt sind.

Der frisch beladene Förderwagen fährt nun mit seiner Ladung auf der Hinspur 30 seiner Förderbahn 10.1, 10.2 bis vor eine Endseite 21 eines der Lagergänge 13, wobei jedem der Lagergänge 13 einer der Bedienungsgänge 4.1, 4.2 fest zugeordnet ist. Dort weisen die Tragdorne 7.1 des Förderwagens 7 in den Lagergang, wobei der Förderwagen in einer Position anhält, in welcher seine Tragdorne in eine fluchtende Position mit den Tragdornen 18 am Aufzug 17 des Lagergeräts 15 bringbar sind. Der Aufzug 17 des Lagergeräts 15 fährt nun die ebenfalls mit der Förderteilung T beabstandeten Tragdorne 18 auf die Förderhöhe I bzw II, welche der Förderwagen angefahren hat. Anschließend fährt das Lagergerät 15 in dem Lagergang 13 auf den Förderwagen zu, bis die Tragdorne 18 des Lagergeräts 15 mit den Tragdornen 7.1 des Förderwagens 7 fluchten, und übernimmt die jeweils zwei Vollspulen.

Der abgeladene Förderwagen fährt nun auf der Rückspur 31 an dem Leerhülsenspeicher 33.1 bzw 33.2 vorbei, lädt dort die für eine Spulspindel erforderliche Anzahl von Leerhülsen auf, und wird dann vorübergehend auf dem als Sackgasse 34 ausgebildeten Teil der Rückspur 31 in Warteposition gebracht, bis ein Doffer Leerhülsen anfordert. Das beladene Regalbediengerät fährt nun in Richtung zur anderen Endseite 21 des Lagergangs 13, wobei der Aufzug auf eine Höhe gefahren wird, in welcher zwei nebeneinander liegende Tragdorne des Hochgatters unbesetzt sind. Anschließend erfolgt eine Schwenkbewegung um 90 Grad, so daß die Tragdorne des Lageräts 15 fluchtend mit den freien Tragdornen des Hochgatters übereinstimmen. Die Vollspulen werden alsdann an das Hochgatter übergeben und zwischengespeichert.

Diese Funktionen wiederholen sich fortlaufend während eines ganzen 24h Tages.

Sofern nun die Einzelkontrolle und die Verpackungsstation besetzt sind, werden die Einzelförderer 20 an einer Endseite 21 des Lagergangs 13 in Position gebracht. Jeder der Einzelförderer 20 besitzt zwar nur einen einzigen Tragdorn 26. Die Abmessungen der Transportplattformen sind jedoch so gewählt, daß die zwei Tragdorne zweier dicht an dicht liegender Einzelförderer ebenfalls den Abstand der Förderteilung T voneinander einnehmen.

In dieser Position können die Tragdorne 18 der Lagergeräte 15 mit den beiden Tragdornen 26 der beiden Transportplattformen 20 in fluchtende Position gebracht werden.

Hierzu nimmt das Lagergerät von zwei benachbarten Tragdornen einer Etage je eine Vollspule ab, schwenkt um 90 Grad in Richtung zu den Einzelförderern, und fährt die Tragdorne 18 auf eine Höhe, die mit der Höhe der Tragdorne 26 der Einzelförderer 20 übereinstimmt.

Danach werden die beiden in Halteposition befindlichen Einzelförderer 20 angefahren und zugleich beladen, so daß diese zur Einzelkontrolle und zur Verpackungsstation abfahren können.

### BEZUGSZEICHENAUFSTELLUNG

- 1: Spinnanlage
- 2: Spulmaschine
- 3: Spulmaschinen-Kolonne
- 4.1: erster Bedienungsgang
- 4.2: zweiter Bedienungsgang
- 5: Doffer
- 5.1: Doffer-Fahrweg
- 6: Vollspule
- 7: Förderwagen
- 7.1: Tragdorn am Förderwagen
- 8: Einzelkontrolle
- 9: Verpackungsstation
- 10.1: erste Förderbahn
- 10.2: zweite Förderbahn
- 11: Zwischenspeicher
- 12: Hochgatter
- 13: Lagergang
- 14: Lagerdorn
- 15: Bediengerät
- 16: Rad
- 17: Aufzug
- 18: Tragdorn am Aufzug
- 19: Schwenkachse des Aufzugs
- 20: Einzelförderer
- 21: Endseite eines Lagergangs
- 22: umlaufende Transportbahn
- 23: Pufferstrecke
- 24: parallele Umwegschleife
- 25: Bewegungsrichtung der beladenen Einzelförderer
- 26: Tragdorn des Einzelförderers
- 27: Umgehungsstrecke
- 28: Spule minderer Qualität
- 29: Transportplattform-Wendeeinrichtung
- 30: Hinspur der Förderbahn
- 31: Rückspur der Förderbahn
- 32: eine Stirnseite des Lagergangs
- 33: Leerhülsenspeicher
- 33.1: einzelne Leerhülse
- 34: Sackgasse
- 35: Umkehrbogen
- 36: erster Ast
- 37: zweiter Ast
- 38: Parallelweiche
- 39: Drehweiche
- 40: Aufzug
- 41: Notbedienungswagen
- 42: Arbeitsarm
- 43: Transportplattform
- 43.1: Rücken-Plattform
- 44: Rollenbahn
- 45: Laufrolle
- 46: Lagerbock
- 47: Fußgestell
- 48: Schwenkachse
- T: Förderteilung

## Patentansprüche

1. Spinnanlage (1) zur ununterbrochenen Herstellung einer Vielzahl von Chemiefäden,
bei der eine Vielzahl von Spulmaschinen (2) in Kolonnen (3) längs eines Bedienungsganges (4.1, 4.2) angeordnet sind und bei der in dem Bedienungsgang (4.1, 4.2) ein Doffer (5) von Spulmaschine zu Spulmaschine (2) fahrbar ist, welcher Doffer (5) an der jeweils angefahrenen und bedienten Spulmaschine (2) Vollspulen (6) von der Spulspindel übernimmt und an einen Förderwagen (7) übergibt, und
bei der die Vollspulen (6) sodann weitere Prozeßstationen (8, 9) durchlaufen,
dadurch gekennzeichnet, daß
vor weiteren Prozeßstationen (8, 9) ein ortsfester Zwischenspeicher (11) zur Zwischenspeicherung der Vollspulen (6) vorgesehen ist, und daß
eine Mehrzahl von einzelbeweglichen Förderwagen (7) auf einer Förderbahn (10.1, 10.2) durch den Bedienungsgang (4.1, 4.2) und von einer der Stirnseiten der Spulmaschinen-Kolonnen (3) zu dem Zwischenspeicher (11) hin- und zurückfahrbar ist, wobei auf dem Hinweg eine Aufnahme der auf einer Spindel hergestellten Vollspulen (6) auf jeweils einem Förderwagen (7) mittels Tragdorn (7.1) erfolgt, und daß
der Zwischenspeicher (11) aus mehreren Hochgattern (12) besteht, die parallel zueinander angeordnet sind und paarweise zwischen sich jeweils einen Lagergang (13) bilden und die mit einer Vielzahl von nebeneinander und in Etagen übereinander angeordneten in Richtung auf den Lagergang (13) auskragenden Lagerdornen (14) ausgestattet sind, und daß
in jedem Lagergang (13) ein Bediengerät (15) fahrbar ist, das einen Aufzug (17) mit Tragdorn (18) zur Übernahme der von einem Förderwagen (7) angelieferten Vollspulen (6) und zur Weitergabe der Vollspulen (6) an die Lagerdorne (14) eines der Hochgatter (12) sowie zur Übernahme der Vollspulen (6) jeweils eines Lagedornes (14) des Zwischenspeichers (11) und zur Weitergabe der Vollspulen (6) an Einzelförderer (20) aufweist, welcher Aufzug (17) höhenverfahrbar ist und derart schwenkbar ist, daß ein Tragdorn (14) des Lagergeräts (15) entweder mit einem Tragdorn (7.1) eines Förderwagens (7) oder mit einem Lagerdorn (14) fluchtet, und daß
die Einzelförderer (20) zwischen einer der Endseiten der Lagergänge (13) und einer weiteren Prozeßstation (8, 9) fahrbar sind.

2. Spinnanlage (1) nach Anspruch 1,
dadurch gekennzeichnet, daß
die Spulmaschinen-Kolonnen (3) entlang mehrerer Bedienungsgänge (4.1, 4.2) angeordnet sind, und daß
jeweils einem Bedienungsgang (4.1, 4.2) eine Förderbahn (10.1, 10.2) für die Förderwagen (7) zugeordnet ist, und daß
die Förderbahnen (10.1, 10.2) voneinander unabhängig sind, wobei
die Förderbahnen (10.1, 10.2) der einzelnen Bedienungsgänge (4.1, 4.2) in derart unterschiedlichen Förderbahnhöhen an dem Zwischenspeicher (11) vorbeiführen, daß die Förderwagen (7) der einzelnen Förderbahnen (10.1, 10.2) ohne gegenseitige Behinderung fahren.

3. Spinnanlage (1) nach Anspruch 1 oder 2,
dadurch gekennzeichnet, daß
jede Förderbahn (10.1, 10.2) in sich geschlossen ist mit einer Hinspur (30) zum Abtransport der vollen Spulen (6) zum Zwischenspeicher (11) und einer Rückspur (31) in umgekehrter Richtung.

4. Spinnanlage (1) nach Anspruch 3,
dadurch gekennzeichnet, daß
die Rückspur (31) jeder Förderbahn (10.1, 10.2) an einem Leerhülsenspeicher (33.1, 33.2) vorbeiführt, zum Beladen jedes Förderwagens mit den für eine Spulspindel erforderlichen Leerhülsen (33.11, 33.22), und daß
der Doffer (5) an der jeweils angefahrenen und bedienten Spulmaschine (2) die für deren Spulspindel erforderlichen Leerhülsen (33.11, 33.22) von einem Förderwagen (7) übernimmt.

5. Spinnanlage (1) nach Anspruch 3 oder 4,
dadurch gekennzeichnet, daß
die Rückspur (31) jeder der geschlossenen Förderbahnen (10.1, 10.2) sich als Sackgasse (34) längs des Bedienungsganges (4.1, 4.2) erstreckt, und daß
die Hinspur (30) im Bedienungsgang (4.1, 4.2) U-förmig ausgeführt ist, wobei ein mit dem Zwischenspeicher (11) verbundener erster Ast auf einer der Seiten der Rückspur (31) liegt,
und wobei ein zweiter Ast an dem dem Zwischenspeicher (11) zugewandten Ende des Bedienungsganges (4.1, 4.2) endet und auf der anderen Seite der Rückspur (31) liegt und wobei der erste und der zweite Ast an dem von dem Zwischenspeicher (11) abgewandten Ende durch einen Umkehrbogen (35) verbunden sind,
und daß der erste Ast und/oder der zweite Ast mit der Rückspur (31) durch Weichen (38, 39) verbunden sind.

6. Spinnanlage (1) nach Anspruch 5,
dadurch gekennzeichnet, daß
die Weichen (39), welche die Rückspur (31) mit dem ersten Ast der Hinspur (30) verbinden, Einrichtungen sind, welche die Förderwagen (7) von der Rückspur auf den ersten Ast der Hinspur (30) umsetzen und dabei umdrehen (Drehweiche (39)).

7. Spinnanlage (1) nach Anspruch 5,
dadurch gekennzeichnet, daß
die Weichen (38), welche die Rückspur (31) mit dem zweiten Ast der Hinspur (30) verbinden, Einrichtungen sind, welche die Förderwagen (7) von der Rückspur (31) parallel zu sich selbst auf den zweiten Ast der Hinspur (30) umsetzen (Parallelweiche (38)).

8. Spinnanlage (1) nach Anspruch 6 und 7,
dadurch gekennzeichnet, daß
mehrere Weichen (38, 39) derart hintereinander angeordnet sind, daß auf der Rückspur (31) Drehweichen (39) und Parallelweichen (38) wechselnd aufeinander folgen.

9. Spinnanlage (1) nach Anspruch 8,
dadurch gekennzeichnet, daß
auf der Rückspur (31) jede Drehweiche (39) in enger Nachbarschaft zu einer Parallelweiche (38) angeordnet ist.

10. Spinnanlage (1) nach einem der Ansprüche 1 bis 9,
dadurch gekennzeichnet, daß
die Förderbahnen (10.1, 10.2)und die Förderwagen (7) als Hängebahnsystem ausgebildet sind.

11. Spinnanlage (1) nach einem der Ansprüche 1 bis 10,
dadurch gekennzeichnet, daß
für die Einzelförderer (20) eine umlaufende Transportbahn (22) vorgesehen ist.

12. Spinnanlage (1) nach Anspruch 11,
dadurch gekennzeichnet, daß
die umlaufende Transportbahn (22) zwischen den weiteren Prozeßstationen (8, 9) und der Endseite (21) der Lagergänge (13) eine Pufferstrecke (23) in Form von Umwegschleifen (24) aufweist.

13. Spinnanlage (1) nach Anspruch 11 oder 12,
dadurch gekennzeichnet, daß
die Einzelförderer (20) als Transportplattformen (43) ausgebildet sind, welche auf einer als Rollenbahn (44) ausgebildeten Transportbahn (22) laufen.

14. Spinnanlage (1) nach einem der Ansprüche 1 bis 13,
dadurch gekennzeichnet, daß
jeder Einzelförderer (20) in eine Halteposition vor jeden der Lagergänge (13) fahrbar ist, in welcher die Weitergabe der Vollspulen (6) mittels des Lagergeräts (15) erfolgt, und daß
jeder Einzelförderer (20) einen einzigen auskragenden Tragdorn (26) aufweist, welcher in jeder der Haltepositionen mit seinem freien Ende horizontal in den Lagergang (13) weist, und daß
der Aufzug (17) zusätzlich derart höhenverfahrbar und schwenkbar ist, daß in der Halteposition des zu bedienenden Einzelförderers (20) ein Tragdorn (18) des Lagergeräts (15) mit dem Tragdorn (26) des Einzelförderers (20) fluchtet.

15. Spinnanlage (1) nach Anspruch 14,
dadurch gekennzeichnet, daß
die Tragdorne (26) der Einzelförderer (20) zwischen den weiteren Prozeßstationen (8, 9) in aufrecht stehende Positionen schwenkbar sind.

16. Spinnanlage (1) nach einem der Ansprüche 1 bis 15,
dadurch gekennzeichnet, daß
jede Spulspindel eine gerade Anzahl von Spulhülsen (33.11, 33.22) aufnimmt, und daß die Tragdorne (7.1) an den Förderwagen (7) und an dem Aufzug (17) des Lagergeräts (15) sowie die Lagerdorne (14) des Hochgatters (12) jeweils paarweise vorhanden sind, wobei jeder einzelne Tragdorn (7.1) bzw. Lagerdorn (14) jeweils für die Aufnahme der halben Anzahl der Spulen (6) einer Spulspindel ausgelegt ist, und daß die Paare von Tragdornen (7.1) bzw. Lagerdornen (14) einen einheitlichen Abstand (Förderteilung (T)) aufweisen.

17. Spinnanlage (1) nach Anspruch 16,
dadurch gekennzeichnet, daß
jeder Doffer (5) paarweise vorhandene Arbeitsarme aufweist, die jeweils für die Aufnahme der halben Anzahl der Spulen (6) einer Spulspindel ausgelegt sind und die ebenfalls die Förderteilung (T) aufweisen.

18. Spinnanlage (1) nach einem der Ansprüche 1 bis 17,
dadurch gekennzeichnet, daß
die Lagerdorne (14) des Hochgatters (12) in den einzelnen Etagen mit gleichen Abständen voneinander und so angeordnet sind, daß die Lagerdorne (14) einer Etage und die Lagerdorne (14) einer benachbarten Etage um die Hälfte des Abstandes (T) zueinander versetzt sind (Fig. 3).

19. Spinnanlage (1) nach einem der Ansprüche 1 bis 18,
dadurch gekennzeichnet, daß
ein Bereich des Hochgatters (12) zur Zwischenspeicherung von Vollspulen (6) reserviert ist, die in der Einzelkontrolle (8) als Spulen (28) minderer Qualität aussortiert und zum Hochgatter (12) zurückgefahren wurden, und daß für die Einzelförderer (20) mit Vollspulen (28) minderer Qualität hinter der Einzelkontrolle (8) eine Umgehungsstrecke (27) der Verpackungsstation (9) vorgesehen ist.

20. Spinnanlage (1) nach einem der Ansprüche 1 bis 19,
dadurch gekennzeichnet, daß
in jedem Bedienungsgang (4.1, 4.2) ein Notaufzug (40) und ein Notbedienungswagen (41) vorgesehen sind, mit welchem Aufzug (40) manuell auf den Notbedienungswagen (41) aufgeladene Spulen (6) auf das Niveau eines Förderwagens (7) anhebbar sind, wobei vorzugsweise der Notaufzug (40) an dem dem Zwischenspeicher (11) zugewandten Ende des zweiten Astes der Hinspur (30) angeordnet ist.

## Claims

1. Spinning plant (1) for the continuous production of a large number of manmade yarns,
in which a large number of winding machines (2) are arranged in lines (3) along a service aisle (4.1, 4.2) and in which a doffer (5) travels in the service aisle (4.1, 4.2) from winding machine to winding machine (2), which doffer (5) retrieves full packages (6) from the winding spindle at each winding machine (2) stopped at and serviced and transfers them to a vehicle (7),
and
in which the full packages (6) thereupon pass through further process stations (8, 9),
characterized in that
provided in advance of further process stations (8, 9) is a stationary buffer store (11) for buffering the full packages (6), and that
a large number of individually movable vehicles (7) travels back and forth on a conveyor track (10.1, 10.2) through the service aisle (4.1, 4.2) and from one of the front faces of the winding machine lines (3) to the buffer store (11), the full packages (6) produced on a spindle being taken onto each vehicle (7) on the outward path by means of carrying mandrel (7.1), and that the buffer store (11) consists of several high-rise creels (12), which are arranged parallel to one another and in pairs form a storage aisle (13) between them in each case, and which are equipped with a large number of storage mandrels (14) arranged side by side and in tiers one above the other projecting in direction onto the storage aisle (13), and that
travelling in each storage aisle (13) is a serving unit (15), which has a lift (17) with carrying mandrel (18) for retrieving the full packages (6) supplied by a vehicle (7) and transferring the full packages (6) to the storage mandrels (14) of one of the high-rise creels (12) and for retrieving the full packages (6) of each storage mandrel (14) of the buffer store (11) and transferring the full packages (6) to single transfer units (20), which lift (17) is adjustable in height and swivellable in such a manner that a carrying mandrel (18) of the storage unit (15) is in alignment either with a carrying mandrel (7.1) of a vehicle (7) or with a storage mandrel (14), and that
the single transfer units (20) travel between one of the ends of the storage aisles (13) and a further process station (8, 9).

2. Spinning plant (1) according to claim 1,
characterized in that
the winding-machine lines (3) are arranged along several service aisles (4.1, 4.2), and that
a conveyor track (10.1, 10.2) for the vehicles (7) is allocated to each service aisle (4.1, 4.2), and that the conveyor tracks (10.1, 10.2) are independent of one another,
the conveyor tracks (10.1, 10.2) of the individual service aisles (4.1, 4.2) passing the buffer store (11) at different conveying heights such that the vehicles (7) of the individual conveyor tracks (10.1, 10.2) travel without mutual obstruction.

3. Spinning plant (1) according to claim 1 or 2,
characterized in that
each conveyor track (10.1, 10.2) is closed, with an outward spur (30) for removing the full packages (6) to the buffer store (11) and a return spur (31) in the opposite direction.

4. Spinning plant (1) according to claim 3,
characterized in that
the return spur (31) of each conveyor track (10.1, 10.2) leads past an empty tube store (33.1, 33.2), to load each vehicle with the empty tubes (33.11, 33.22) required for a winding spindle, and that
the doffer (5) at the winding machine (2) stopped at and serviced in each case retrieves the empty tubes (33.11, 33.22) required for its winding spindle from a vehicle (7).

5. Spinning plant (1) according to claim 3 or 4,
characterized in that
the return spur (31) of each of the closed conveyor tracks (10.1, 10.2) extends as a blind alley (34) along the service aisle (4.1, 4.2), and that
the outward spur (30) is formed in the service aisle (4.1, 4.2) in the shape of a U, a first branch connected to the buffer store (11) lying on one of the sides of the return spur (31),
and a second branch ending at the end of the service aisle (4.1, 4.2) facing the buffer store (11) and lying on the other side of the return spur (31), and the first and second branch being connected at the end facing away from the buffer store (11) by a U-bend (35),
and that the first branch and/or the second branch are connected to the return spur (31) by track switches (38, 39).

6. Spinning plant (1) according to claim 5,
characterized in that
the track switches (39), which connect the return spur (31) to the first branch of the outward spur (30), are devices which transfer the vehicles (7) from the return spur to the first branch of the outward spur (30) and in so doing turn them (turning track switch (39)).

7. Spinning plant (1) according to claim 5,
characterized in that
the track switches (38), which connect the return spur (31) to the second branch of the outward spur (30), are devices which transfer the vehicles (7) from the return spur (31) parallel to themselves to the second branch of the outward spur (30) (parallel track switch (38)).

8. Spinning plant (1) according to claim 6 and 7,
characterized in that
several track switches (38, 39) are arranged in such a manner one after another that on the return spur (31) turning track switches (39) and parallel track switches (38) follow one another in alternating order.

9. Spinning plant (1) according to claim 8,
characterized in that
on the return spur (31) each turning track switch (39) is arranged in close proximity to a parallel track switch (38).

10. Spinning plant (1) according to any one of claims 1 to 9,
characterized in that
the conveyor tracks (10.1, 10.2) and the vehicles (7) are formed as a suspension monorail system.

11. Spinning plant according to any one of claims 1 to 10,
characterized in that
a circulating transfer track (22) is provided for the single transfer units (20).

12. Spinning plant (1) according to claim 11,
characterized in that
the circulating transfer track (22) has a buffer section (23) in the form of detour loops (24) between the further process stations (8, 9) and the end (21) of the storage aisles (13).

13. Spinning plant (1) according to claim 11 or 12,
characterized in that
the single transfer units (20) are formed as transport platforms (43), which run on a transfer track (22) formed as a roller conveyor (44).

14. Spinning plant (1) according to any one of claims 1 to 13,
characterized in that
each single transfer unit (20) is movable into a stopping position in front of each of the storage aisles (13), in which the full packages (6) are transferred by means of the storage unit (15), and that
each single transfer unit (20) has a single projecting carrying mandrel (26), which points with its free end horizontally into the storage aisle (13) in each of the stopping positions, and that
the lift (17) is additionally adjustable in height and swivellable in such a manner that in the stopping position of the single transfer unit (20) to be serviced a carrying mandrel (18) of the storage unit (15) is in alignment with the carrying mandrel (26) of the single transfer unit (20).

15. Spinning plant (1) according to claim 14,
characterized in that
the carrying mandrels (26) of the single transfer units (20) are swivellable between the further process stations (8, 9) into upright positions.

16. Spinning plant (1) according to any one of claims 1 to 15,
characterized in that
each winding spindle takes an even number of winding tubes (33.11, 33.22), and that the carrying mandrels (7.1) on the vehicles (7) and on the lift (17) of the storage unit (15) and the storage mandrels (14) of the high-rise creel (12) are in pairs respectively, each individual carrying mandrel (7.1) or storage mandrel (14) being designed to take half the number of packages (6) of a winding spindle, and that the pairs of carrying mandrels (7.1) or storage mandrels (14) have a uniform spacing (transfer pitch (T)).

17. Spinning plant (1) according to claim 16,
characterized in that
each doffer (5) has operating arms in pairs, which are each designed to take half the number of packages (6) of a winding spindle and which likewise have the transfer pitch (T).

18. Spinning plant (1) according to any one of claims 1 to 17,
characterized in that
the storage mandrels (14) of the high-rise creel (12) are arranged in the individual tiers at the same distances from one another and so that the storage mandrels (14) of one tier and the storage mandrels (14) of an adjacent tier are displaced in relation to one another by half the spacing (T) (Fig. 3).

19. Spinning plant (1) according to any one of claims 1 to 18,
characterized in that
a zone of the high-rise creel (12) is reserved for the buffering of full packages (6) which have been singled out in the individual inspection facility (8) as packages (28) of inferior quality and returned to the high-rise creel (12), and that for single transfer units (20) with full packages (28) of inferior quality a section (27) by-passing the packing station (9) is provided behind the individual inspection facility (9).

20. Spinning plant (1) according to any one of claims 1 to 19,
characterized in that
provided in each service aisle (4.1, 4.2) is an emergency lift (40) and an emergency servicing unit (41), using which lift (40) packages (6) loaded manually onto the emergency servicing unit (41) can be raised to the level of a vehicle (7), the emergency lift (40) preferably being arranged at the end of the second branch of the outward spur (30) facing the buffer store (11).

## Revendications

1. Installation de filage (1) destinée à la fabrication en continu d'une pluralité de fibres chimiques, dans laquelle une pluralité de bobinoirs (2) sont disposés en colonnes (3) le long d'un couloir de service (4.1, 4.2), dans laquelle un dispositif (5) leveur de bobines peut se déplacer de bobinoir (2) en bobinoir dans le couloir de service, lequel dispositif (5) leveur de bobines prend les bobines pleines (6) sur la broche de bobinage du bobinoir (2) devant lequel il est placé et qu'il dessert et les dépose sur un chariot transporteur (7), et dans laquelle les bobines (6) pleines traversent ensuite d'autres postes de traitement (8, 9), caractérisée par le fait qu'il est prévu devant d'autres postes de traitement (8, 9) un magasin (11) intermédiaire fixe destiné au stockage intermédiaire des bobines pleines (6), par le fait qu'une pluralité de chariots transporteurs (7) mobiles individuellement peuvent effectuer un déplacement de va-et-vient sur une voie (10.1, 10.2) dans le couloir de service (4.1, 4.2) et entre l'une des extrémité frontales des colonnes (3) de bobinoirs et le magasin (11) intermédiaire, les bobines pleines (6) formées sur une broche étant prises en charge lors du trajet aller par un chariot transporteur (7) par l'intermédiaire d'un axe de support (7.1), par le fait que le magasin (11) intermédiaire se compose de plusieurs rateliers (12) verticaux qui sont disposés parallèlement les uns aux autres, définissent deux à deux entre eux un couloir (13) de magasin et sont équipés d'une pluralité d'axes (14) de stockage disposés les uns à côté des autres et les uns au-dessus des autres, en étages, en faisant saillie en direction du couloir (13) de magasin, par le fait qu'un appareil de magasinage (15) peut se déplacer dans chaque couloir (13) de magasin et comporte un ascenseur (17) pourvu d'axes de support (18) destinés à prendre des bobines pleines (6) amenées par un chariot transporteur (7) et à transférer lesdites bobines pleines (6) sur les axes (14) de stockage de l'un des rateliers (12) verticaux ainsi qu'à prendre les bobines pleines (6) d'un axe (14) de stockage du magasin intermédiaire (11) et à transférer lesdites bobines pleines (6) sur des transporteurs (20) individuels, lequel ascenseur (17) peut se déplacer en hauteur et peut pivoter de manière telle qu'un axe de support (7.1) de l'appareil de magasinage (15) soit aligné soit avec un axe de support (7.1) du chariot transporteur (7), soit avec un axe de stockage (14) et par le fait que les transporteurs individuels (20) se déplacent entre l'une des extrémités des couloirs de magasin (13) et un autre poste de traitement (8, 9).

2. Installation de filage (1) selon la revendication 1, caractérisée par le fait que les colonnes de bobinoirs (3) sont disposées le long de plusieurs couloirs de service (4.1, 4.2), par le fait qu'une voie de transport (10.1, 10.2) pour les chariots transporteurs (7) est associée chaque fois à un couloir de service (4.1, 4.2), par le fait que les voies (10.1, 10.2) sont indépendantes les unes des autres, les voies de transport (10.1, 10.2) des différents couloirs de service (4.1, 4.2) passant devant le magasin intermédiaire (11) à des hauteurs différentes telles que les chariots transporteurs (7) des différentes voies de transport (10.1, 10.2) puissent circuler sans se gêner mutuellement.

3. Installation de filage (1) selon la revendication 1 ou la revendication 2, caractérisée par le fait que chaque voie de transport (10.1, 10.2) est fermée sur elle-même avec une voie aller (30) pour le transport des bobines pleines (6) en direction du magasin intermédiaire (11) et une voie de retour (31) menant dans la direction opposée.

4. Installation de filage (1) selon la revendication 1, caractérisée par le fait que la voie de retour (31) de chaque voie (10.1, 10.2) passe devant un magasin (33.1, 33.2) à noyaux de bobines vides pour charger chaque chariot transporteur des noyaux de bobines (33.11, 33.22) vides nécessaires à une broche de bobinage et par le fait que le dispositif (5) leveur de bobines du bobinoir (2) desservi, devant lequel est placé le chariot, prend sur un chariot transporteur (7) les noyaux de bobines (33.11, 33.22) vides nécessaires pour la broche de bobinage.

5. Installation de filage (1) selon la revendication 3 ou la revendication 4, caractérisée par le fait que la voie de retour (31) de chacune des voies de transport (10.1, 10.2) fermées s'étend sous la forme d'une voie (34) sans issue le long du couloir de service (4.1, 4.2), par le fait que la voie (30) aller forme un U dans le couloir de service (4.1, 4.2), une première branche liée au magasin intermédiaire (11) étant située d'un côté de la voie de retour (31) et une deuxième branche qui se termine à l'extrémité du couloir de service (4.1, 4.2) tournée vers le magasin intermédiaire étant située de l'autre côté de la voie de retour (31), la première et la deuxième branche étant reliées par une section de rebroussement (35) à l'extrémité éloignée du magasin intermédiaire (11) et par le fait que la première branche et/ou la deuxième branche sont reliées à la voie de retour (31) par des aiguillages (38, 39).

6. Installation de filage (1) selon la revendication 5, caractérisée par le fait que les aiguillages (39) qui relient la voie de retour (31) à la première branche de la voie aller (30) sont des dispositifs qui transfèrent les chariots transporteurs (7) de la voie de retour sur la première branche de la voie aller (30) et tournent lesdits chariots (aiguillage tournant (39)).

7. Installation de filage (1) selon la revendication 5, caractérisée par le fait que les aiguillages (38) qui relient la voies de retour (31) à la deuxième branche de la voie aller (30) sont des dispositifs qui transfèrent les chariots transporteurs (7) parallèlement à eux mêmes, de la voie de retour (31) sur la deuxième branche de la voie aller (30) (aiguillage parallèle (38)).

8. Installation de filage (1) selon la revendication 6 et la revendication 7, caractérisée par le fait que plusieurs aiguillages (38, 39) sont disposés l'un derrière l'autre de manière telle que sur la voie de retour (31) des aiguillages (39) tournants et des aiguillages (38) parallèles se succèdent en alternance.

9. Installation de filage (1) selon la revendication 8, caractérisée par le fait que sur la voie de retour (31) chaque aiguillage (39) tournant est disposé à proximité immédiate d'un aiguillage (38) parallèle.

10. Installation de filage (1) selon l'une des revendications 1 à 9, caractérisée par le fait que les voies de transport (10.1, 10.2) et les chariots transporteurs (7) sont agencés sous forme de système à voie suspendue.

11. Installation de filage (1) selon l'une des revendications 1 à 10, caractérisée par le fait qu'il est prévu pour chaque transporteur individuel (20) une voie de transport (22) en boucle.

12. Installation de filage (1) selon la revendication 11, caractérisée par le fait que la voie de transport (22) en boucle présente entre les autres postes de traitement (8, 9) et le côté d'extrémité (21) des couloirs de magasin (13) une zone (23) tampon sous la forme de boucles d'évitement (24).

13. Installation de filage (1) selon la revendication 11 ou la revendication 12, caractérisée par le fait que les transporteurs individuels (20) sont agencés sous forme de plateformes (43) de transport qui se déplacent sur une voie de transport (22) agencée sous forme de transporteur à rouleaux (44).

14. Installation de filage (1) selon l'une des revendications 1 à 13, caractérisée par le fait que chaque transporteur individuel (20) peut être amené devant chaque couloir de magasin (13) dans une position d'arrêt dans laquelle a lieu le transfert des bobines pleines (6) au moyen de l'appareil de magasinage (15), par le fait que chaque transporteur individuel (20) comporte un unique axe de support (26) en porte-à-faux dont l'extrémité libre, dans chacune des positions d'arrêt, est orientée horizontalement vers l'intérieur du couloir de magasin (13) et par le fait que l'ascenseur (17) peut en outre être déplacé en hauteur et pivoter de manière telle que, dans la position d'arrêt du transporteur individuel (20) à desservir, un axe de support (18) de l'appareil de magasinage (15) soit aligné avec l'axe de support (26) du transporteur individuel (20).

15. Installation de filage (1) selon la revendication 14, caractérisée par le fait qu'entre les autres postes de traitement (8, 9), les axes de support (26) des transporteurs individuels (20) peuvent être amenés par pivotement dans des positions dressées.

16. Installation de filage (1) selon l'une des revendications 1 à 15, caractérisée par le fait que chaque broche de bobinage reçoit un nombre pair de noyaux de bobine (33.11, 33.22), par le fait les axes de support (7.1) sur les chariots transporteurs (7) et sur l'ascenseur (17) de l'appareil de magasinage (15) ainsi que les axes (14) de stockage du ratelier (12) vertical sont prévus par paires chaque fois, chaque axe individuel de support (7.1) ou de stockage (14) étaut agencé pour recevoir la moitié du nombre de bobines (6) d'une broche de bobinage et par le fait que les paires d'axes de support (7.1) ou de stockage (14) sont disposées avec un espacement uniforme (pas d'avance (T)).

17. Installation de filage (1) selon la revendication 16, caractérisée par le fait que chaque dispositif (5) leveur de bobines comporte des bras de travail qui sont prévus par paire, sont agencés chaque fois pour recevoir la moitié du nombre des bobines (6) d'une broche de bobinage et présentent également le pas d'avance (T).

18. Installation de filage (1) selon l'une des revendications 1 à 17, caractérisée par le fait que les axes de stockage (14) du ratelier (12) vertical dans les différents étages sont disposés avec un espacement mutuel identique et de manière telle que les axes de stockage (14) d'un étage et les axes de stockage (14) d'un étage voisin soient mutuellement décalés de la moitié de la distance (T) (figure 3).

19. Installation de filage (1) selon l'une des revendications 1 à 18, caractérisée par le fait qu'une partie du ratelier (12) vertical est réservée au stockage intermédiaire de bobines pleines (6) qui, au poste de contrôle individuel (8) ont été séparées en tant que bobines (28) de qualité moindre et ont été ramenées audit ratelier (12) vertical et par le fait qu'il est prévu pour les transporteurs (20) individuels chargés de bobines pleines (28) de moindre qualité, derrière le poste de contrôle individuel (8), une voie (27) d'évitement du poste d'emballage (9).

20. Installation de filage (1) selon l'une des revendications 1 à 19, caractérisée par le fait qu'il est prévu dans chaque couloir de service (4.1, 4.2), un ascenseur de secours (40) et un chariot de secours (41) ascenseur de secours (40) au moyen duquel des bobines pleines (6) chargées manuellement sur le chariot de secours (41) peuvent être amenées au niveau d'un chariot transporteur (7), l'ascenseur de secours (40) étant disposé de préférence à l'extrémité de la deuxième branche de la voie aller (30) tournée vers le magasin intermédiaire (11).
